# EUROPEAN PATENT APPLICATION

(11) **EP 2 610 454 A1**
(43) Date of publication of application: **03.07.2013**
(21) Application number: 11819895.1
(22) Date of filing: 22.08.2011
(51) Int. Cl.: F01N 3/08, B01D 53/94, B63B 35/00, B63H 21/20, B63H 21/32, B63J 3/02, B63J 99/00, F01K 23/10, F01N 3/20, F01N 5/04, F02B 37/10, F02B 41/10, F02G 5/00, F02G 5/02, H02J 3/38

(54) **MARINE VESSEL DENITRATION SYSTEM, MARINE VESSEL EQUIPPED WITH SAME, AND CONTROL METHOD FOR MARINE VESSEL DENITRATION SYSTEM**

(30) Priority: 26.08.2010 JP 2010189505
(71) Applicant: Mitsubishi Heavy Industries, Ltd., Tokyo 108-8215 (JP)
(72) Inventor: MURATA, Satoru, Tokyo 108-8215 (JP); HIRAOKA, Naohiro, Tokyo 108-8215 (JP)
(74) Representative: HOFFMANN EITLE
(86) International application number: PCT/JP2011/068888
(87) International publication number: WO 2012/026432

(57) **Abstract**

Provided is a marine vessel denitration system capable of supplying electric power to an ammonia producing device that produces ammonia for use in denitration, while keeping energy consumption low. The system includes an ammonia producing device (2) supplied with electric power from a marine vessel electric power system (30); an SCR catalyst unit (4) that performs denitration of exhaust gas; a hybrid turbocharger that generates electric power using exhaust gas energy from a main engine (3) and supplies the electric power to the marine vessel electric power system (30); a shaft generator motor (13) capable of operating to generate electric power to be supplied to the marine vessel electric power system (30) and assisting a propeller shaft (10) when driven by electric power supplied from the marine vessel electric power system (30); and a power management system (72) that controls an electric power supply to the ammonia producing device (2), an electric power output from the hybrid turbocharger, and an electric power supply to and an electric power output from the shaft generator motor (13).

## Description

### {Technical Field}

The present invention relates to a marine vessel denitration system mounted on a marine vessel and suitably used, for example, for denitration of exhaust gas from a diesel engine, to a marine vessel equipped with the same, and to a control method for a marine vessel denitration system.

### {Background Art}

Denitration equipment is mounted on marine vessels to remove nitrogen oxide (NOx) produced by the diesel engine (main engine) used for marine vessel propulsion.
In the below-mentioned Patent Document 1, an invention which enables production of ammonia for use as a reducing agent of a denitration catalyst on a marine vessel is disclosed. Since the ammonia can be produced on the marine vessel, there is no need to transport liquid ammonia onto the marine vessel and store the liquid ammonia on the marine vessel. Moreover, liquid ammonia is handled as a hazardous material and so, if used, special storage equipment such as a leak detection sensor and double walled piping must be installed. However, if as much ammonia as required can be produced on the marine vessel, there is no need to install the special storage equipment.

### {Citation List}

### {Patent Literature}

{PTL 1}
Japanese Unexamined Patent Application Publication No. H11-292531

### {Summary of Invention}

### {Technical Problem}

To produce ammonia on the marine vessel, electrical energy is required to drive transfer pumps, perform electrolysis of water and the like. In the above-mentioned Patent Document 1, use of electric power from a diesel engine electric power generator which is an auxiliary engine is described.
However, generally speaking, because diesel engine electric power generators have a lower thermal efficiency than the main engine, when the electric power for producing ammonia is obtained from a diesel engine electric power generator, more energy is wasted. Hence, from the point of view of saving energy, use of the diesel engine electric power generator is not favorable.

Moreover, when excessive electric power is generated in the marine vessel, it is desirable that the excessive electric power can be used effectively.

The present invention was conceived upon consideration of the above circumstances and has an objective of providing a marine vessel denitration system, a marine vessel equipped with the same and a control method for a marine vessel denitration system, the marine vessel denitration system being capable of supplying electric power to an ammonia producing device that produces ammonia for denitration, in a stable manner while keeping energy consumption low.

### {Solution to Problem}

To solve the above-described problem, the following means are used in the marine vessel denitration system, the marine vessel equipped with the same and the control method for a marine vessel denitration system of the present invention.
Specifically, the marine vessel denitration system according to a first aspect of the present invention includes: an ammonia producing device that has a hydrogen producing unit for producing hydrogen from water and a nitrogen producing unit for producing nitrogen from air, that produces ammonia from the hydrogen produced by the hydrogen producing unit and the nitrogen produced by the nitrogen producing unit, and that is supplied with electric power from a marine vessel electric power system; a denitration catalyst unit that is provided in an exhaust gas passage of a main engine for marine vessel propulsion and performs denitration of the exhaust gas with the ammonia produced by the ammonia producing device; an electric power generator that generates electric power using exhaust gas energy from the main engine and supplies the electric power to the marine vessel electric power system; a shaft generator motor that generates electric power by being driven by the main engine to enable electric power generating operations for supplying electric power to the marine vessel electric power system and assists a propeller shaft when driven by electric power supplied from the marine vessel electric power system; and an electric power output control unit that controls an electric power supply to the ammonia producing device, an electric power output from the electric power generator, and an electric power supply to and an electric power output from the shaft generator motor.

The ammonia producing device has the hydrogen producing unit that produces hydrogen from water and the nitrogen producing unit that produces nitrogen from air, and produces ammonia from the hydrogen and the nitrogen produced by the hydrogen producing unit and the nitrogen producing unit, respectively. Thus, the ammonia can be produced on the marine vessel using water and air as raw materials, and there is no need to provide space on the marine vessel for storing reducing agents such as liquid ammonia (aqueous ammonia solution or the like) or urea. Hence, the marine vessel denitration system can be installed on the marine vessel without taking a large space.
Further, electric power output recovered from the exhaust gas energy from the main engine is used, via the marine vessel electric power system, in the ammonia producing device. As a result, the ammonia producing device can be operated with low energy consumption, and thus it is possible to avoid increasing the capacity or a number of separately provided electric power generating auxiliary engines, such as diesel engine electric power generators.
Also, because a shaft generator motor for assisting the propeller shaft is provided, the fuel consumption rate of the main engine can be reduced. Moreover, the shaft generator motor for assisting the propeller shaft receives an electric power supply from the marine vessel electric power system. Hence, the shaft electric power generator motor is driven by electric power recovered from the exhaust energy by the electric power generator and, consequently, a system with a high thermal efficiency can be constructed. In particular, when the marine vessel is operating in regions where the exhaust gas denitration is not required, there is no need to supply electric power to the ammonia producing device. Hence, excessive electric power recovered from the exhaust energy can be used effectively in the shaft generator motor.

Further, the marine vessel denitration system according to the first aspect may include a storage battery connected to the marine vessel electric power system.

Due to the inclusion of the storage battery connected to the marine vessel electric power system, electric power from the storage battery can be used when fluctuations in the load of the main engine result in fluctuations in the electric power output from the electric power generator. This arrangement is particularly effective at low main engine loads when sufficient electric power output from the electric power generator cannot be obtained. With this arrangement, electric power can be supplied in a stable manner to the ammonia producing device via the marine vessel electric power system. Further, because the storage battery is connected to the marine vessel electric power system in the same way as the electric power generator, excessive electric power generated by the electric power generator can be stored. Also, when the main engine is decelerated, a motive power may be recovered using the storage battery.
When an electric power generating engine is provided in the marine vessel, the inclusion of the storage battery enables the suppression of load fluctuations, and thus allows the capacity and size of the electric power generating engine to be reduced.

Further, with the marine vessel denitration system according to the first aspect, photovoltaic power generator may be connected to the marine vessel electric power system.

Since the photovoltaic power generator is connected to the electric power system, electric power output from the photovoltaic power generator can be supplied to the storage battery. As a result, electric power can be supplied in a more stable manner.

With the marine vessel denitration system according to the first aspect, an external electric power input unit for receiving an electric power supply from an electric power source outside the marine vessel may be connected to the marine vessel electric power system.

Since the external electric power input unit for receiving an electric power supply from an electric power source outside the marine vessel is connected to the electric power system, the marine vessel can, for example, be supplied with electric power from an external (on-shore) source when berthed. As a result, it is not necessary to run the electric power generating engine when the marine vessel is berthed, and a so-called zero emission state can be achieved.

The marine vessel denitration system according to the first aspect may further include an electric heater that heats the exhaust gas being introduced to the denitration catalyst unit, with the electric heater being supplied with electric power from the marine vessel electric power system.

In a selective catalytic reduction (SCR) catalyst, which is the method mainly applied in denitration catalyst units, the risk of deterioration increases as the temperature of the exhaust gas decreases. According to the above-described configuration, the exhaust gas temperature is increased using the electric heater, and so deterioration of the SCR catalyst can be prevented.
Further, the electric heater is connected to the marine vessel electric power system and can therefore be supplied with electric power from the shaft generator motor. For example, when the main engine is started, the amount of exhaust gas energy is low and exhaust energy cannot be recovered. In such cases, the above-described configuration is effective because the electric power generated by the shaft generator motor can be supplied to the electric heater.

Further, in the marine vessel denitration system according to the first aspect, an electric power generator connected to a turbocharger that generates electric power by obtaining rotation energy of an exhaust turbocharger of the main engine may be used as the electric power generator.

One known example of a turbocharger including an electric power generator connected to a turbocharger that generates electric power by obtaining rotation energy of an exhaust turbocharger of the main engine is a hybrid turbocharger. Here, the electric power generator connected to a turbocharger is used as the electric power generator for supplying electric power to the marine vessel electric power system. As a result, the exhaust energy from the main engine can be used effectively.

Further, in the marine vessel denitration system according to the first aspect, an electric power generator connected to a power turbine that generates electric power with a power turbine driven by the exhaust gas from the main engine may be used as the electric power generator.

The electric power generator connected to the power turbine that generates electric power with the power turbine driven by the exhaust gas from the main engine is used as the electric power generator for supplying electric power to the marine vessel electric power system. As a result, the exhaust energy from the main engine can be used effectively.

Further, in the marine vessel denitration system according to the first aspect, an electric power generator connected to a steam turbine that generates electric power with a steam turbine driven by steam generated with an exhaust gas boiler utilizing the exhaust gas from the main engine may be used as the electric power generator.

Here, the electric power generator connected to the steam turbine that generates electric power with a steam turbine driven by steam generated with the exhaust gas boiler utilizing the exhaust gas from the main engine is used as the electric power generator for supplying electric power to the marine vessel electric power system. As a result, the exhaust energy from the main engine can be used effectively.

Further, in the marine vessel denitration system according to the first aspect, an electric power generator connected to a combined turbine that generates electric power using the power turbine driven by the exhaust gas from the main engine and a steam turbine driven by steam generated with the exhaust gas boiler utilizing the exhaust gas from the main engine may be used as the electric power generator.

In the electric power generator connected to the combined turbine, different types (heterogeneous) of turbines such as a power turbine and a steam turbine are connected. When the electric power generator connected to the combined turbine is used, electric power is generated using both the power turbine driven by the exhaust gas from the main engine and the steam turbine driven by steam generated with the exhaust gas boiler utilizing the exhaust gas from the main engine. Hence, the exhaust energy from the main engine can be used more effectively.

Further, in the marine vessel denitration system according to the first aspect, an electric power generator connected to a heat transmitting medium turbine that generates electric power using a turbine driven by a vaporized heating medium may be used as the electric power generator, the heating medium being vaporized through heat exchange with heated water, and the heated water being heated by heat exchange with exhaust gas and/or cooling water from a jacket or an air cooler of the main engine.
Systems using alternative CFCs with a boiling point lower than water (such as R-245fa or R-134a), or organic heating media such as pentane or butane are well-known as the heating medium. Such systems are known as the Rankin cycle.

A marine vessel according to a second aspect of the present invention includes a main engine for marine vessel propulsion and any one of the above-described marine vessel denitration systems.

Any of the above-described marine vessel denitration systems are capable of supplying electric power in an efficient and stable manner, and is therefore suitable for installation in a marine vessel.

Further, a control method for a marine vessel denitration system according to a third aspect of the present invention for controlling a marine vessel denitration system including: an ammonia producing device that has a hydrogen producing unit for producing hydrogen from water and a nitrogen producing unit for producing nitrogen from air, that produces ammonia from the hydrogen produced by the hydrogen producing unit and the nitrogen produced by the nitrogen producing unit, and that is supplied with electric power from a marine vessel electric power system; a denitration catalyst unit that is provided in an exhaust gas passage of a main engine for marine vessel propulsion and performs denitration of the exhaust gas with the ammonia produced by the ammonia producing device; an electric power generator that generates electric power using exhaust gas energy from the main engine and supplies the electric power to the marine vessel electric power system; and a shaft generator motor that generates electric power by being driven by the main engine to enable electric power generating operations for supplying electric power to the marine vessel electric power system and assists a propeller shaft when driven by electric power supplied from the marine vessel electric power system, wherein the control method for a marine vessel denitration system includes controlling an electric power supply to the ammonia producing device, an electric power output from the electric power generator, and an electric power supply to and electric power output from the shaft generator motor by an electric power output control unit.

The ammonia producing device has the hydrogen producing unit that produces hydrogen from water and the nitrogen producing unit that produces nitrogen from air, and produces ammonia from the hydrogen and the nitrogen produced by the hydrogen producing unit and the nitrogen producing unit, respectively. Thus, the ammonia can be produced on the marine vessel using water and air as raw materials, and there is no need to provide space on the marine vessel for storing reducing agents such as liquid ammonia (aqueous ammonia solution or the like) or urea. Hence, the marine vessel denitration system can be installed on the marine vessel without ensuring a large space.
Further, electric power output recovered from the exhaust gas energy from the main engine is used, via the marine vessel electric power system, in the ammonia producing device. As a result, the ammonia producing device can be operated with low energy consumption, and thus it is possible to avoid increasing the capacity or a number of separately provided electric power generating auxiliary engines, such as diesel engine electric power generators.
Also, because the shaft generator motor for assisting the propeller shaft is provided, the fuel consumption rate of the main engine can be reduced. Moreover, the shaft generator motor for assisting the propeller shaft receives an electric power supply from the marine vessel electric power system. Hence, the shaft generator motor is driven by electric power recovered from the exhaust energy by the electric power generator and, consequently, a system with a high thermal efficiency can be constructed. In particular, when the marine vessel is operating in regions where the exhaust gas denitration is not required, there is no need to supply electric power to the ammonia producing device. Hence, excessive electric power recovered from the exhaust energy can be used effectively in the shaft generator motor.

### {Advantageous Effects of Invention}

According to the present invention, electric power is supplied to an ammonia producing device that produces ammonia for use in denitration, in a stable manner while keeping energy consumption low.

### {Brief Description of Drawings}

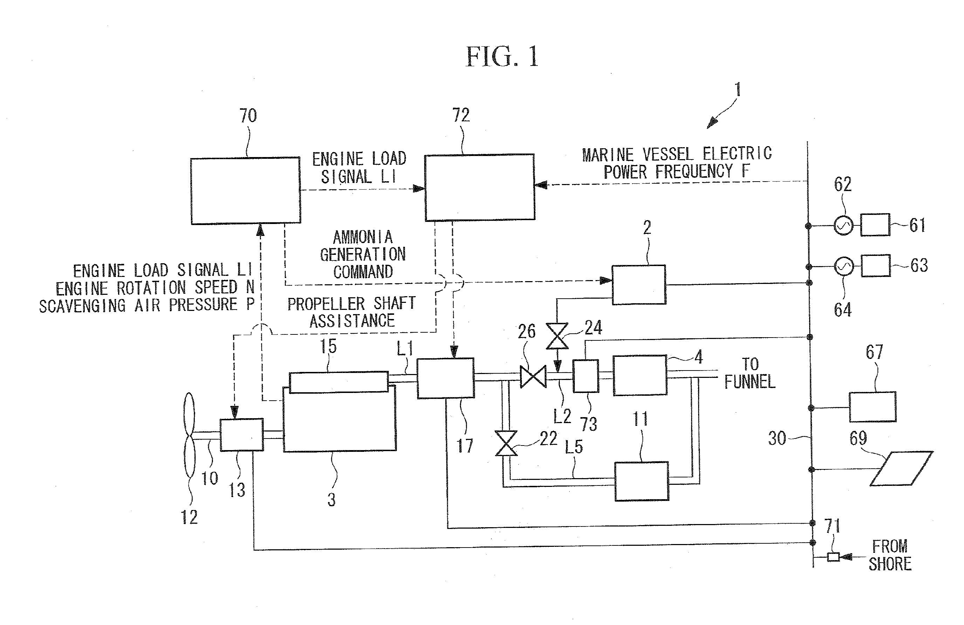

{Fig. 1}
   FIG. 1 is a schematic view illustrating a configuration surrounding a main engine where a marine vessel denitration system according to a first embodiment of the present invention is provided.
{Fig. 2}
   FIG. 2 is a schematic view illustrating a specific configuration of a waste heat of exhaust gas recovery system of FIG. 1.
{Fig. 3}
   FIG. 3 is a schematic view illustrating an overview of an ammonia producing device depicted in FIG. 1.
{Fig. 4}
   FIG. 4 is a mapping for the first embodiment, showing electric power generation amount plotted against load of the main engine.
{Fig. 5}
   FIG. 5 is a timing chart illustrating a change in each control amount with respect to operation time of a marine vessel.
{Fig. 6}
   FIG. 6 is a schematic view illustrating a specific configuration of an exhaust energy recovery system according to a second embodiment of the present invention.
{Fig. 7}
   FIG. 7 is a mapping for the second embodiment, showing electric power generation amount plotted against load of the main engine.
{Fig. 8}
   FIG. 8 is a schematic view illustrating a specific configuration of an exhaust energy recovery system according to a third embodiment of the present invention.
{Fig. 9}
   FIG. 9 is a mapping for the third embodiment, showing electric power generation amount plotted against load of the main engine.
{Fig. 10}
   FIG. 10 is a schematic view illustrating a specific configuration of an exhaust energy recovery system according to a fourth embodiment of the present invention.
{Fig. 11}
   FIG. 11 is a mapping for the fourth embodiment, showing electric power generation amount plotted against load of the main engine.
{Fig. 12}
   FIG. 12 is a schematic view illustrating an exhaust energy recovery system according to a fifth embodiment of the present invention.
{Fig. 13}
   FIG. 13 is a mapping for the fifth embodiment, showing electric power generation amount plotted against load of the main engine.

### {Description of Embodiments}

Next, embodiments according to the present invention will be described while referring to the drawings.

### (First Embodiment)

A first embodiment of the present invention will be described below using FIG. 1.
FIG. 1 schematically illustrates a configuration surrounding a main engine 3 where a marine vessel denitration system 1 according to this embodiment is provided.
The marine vessel is provided with the main engine 3 (e.g., a diesel engine) for marine vessel propulsion, the denitration system 1 for denitrating the exhaust gas from the main engine 3, an exhaust energy recovery system 17 that recovers exhaust gas energy from the main engine 3 and generates electric power, and an exhaust gas economizer (exhaust gas boiler) 11 that generates steam using the exhaust gas from the main engine 3.

An output shaft of the main engine 3 is connected to a shaft generator motor 13. A screw propeller 12 is attached to the shaft generator motor 13 via a propeller shaft 10.
The shaft generator motor 13 is capable both of performing motor operations to assist the main engine 3 by obtaining electric power from the marine vessel electric power system 30, and of performing electric power generating operations to generate electric power when driven by the main engine 3. Operation of the shaft generator motor 13 is controlled by a later-described power management system 72.
An exhaust port of each cylinder unit of the main engine 3 is connected to an exhaust manifold 15, which forms an exhaust gas collection pipe. The exhaust manifold 15 is connected to the exhaust energy recovery system 17.

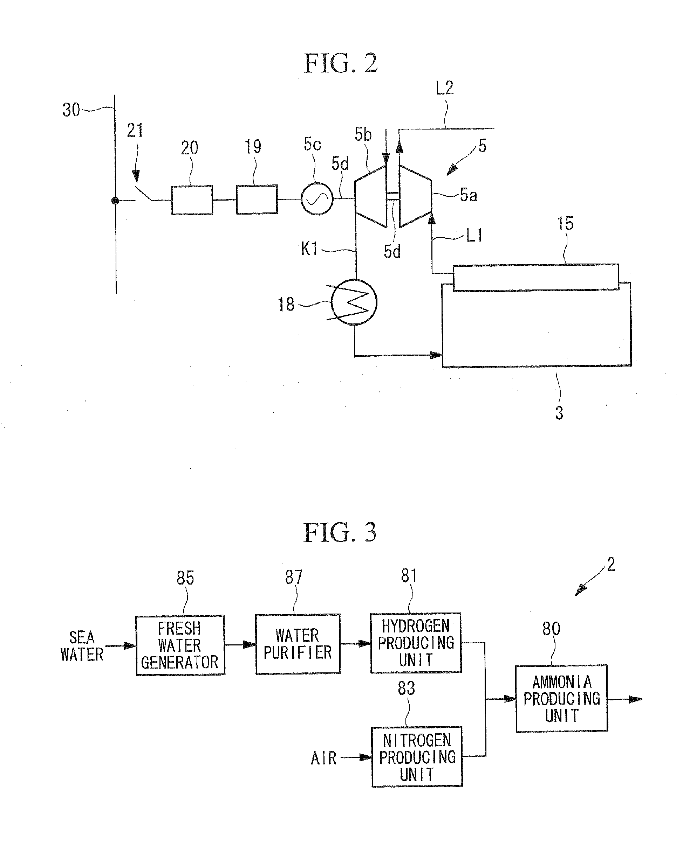

FIG. 2 illustrates a hybrid turbocharger 5 as an example of the exhaust energy recovery system 17.
As illustrated in FIG. 2, the exhaust manifold 15 is connected to an inlet side of the turbine unit 5a of the hybrid turbocharger 5 via a first exhaust pipe L1.
On the other hand, an intake port of each cylinder unit of the main engine 3 is connected to an intake manifold. The intake manifold is connected to a compressor unit 5b of the hybrid turbocharger 5 via an intake pipe K1. An air cooler (intercooler) 18 is installed in the intake pipe K1.

The hybrid turbocharger 5 includes the turbine unit 5a, the compressor unit 5b, and a hybrid electric power generator motor (electric power generator connected to a turbocharger) 5c. The turbine unit 5a, the compressor unit 5b, and the hybrid electric power generator motor 5c are coupled coaxially by a rotating shaft 5d.
The hybrid electric power generator motor 5c generates electric power by obtaining rotation energy from the turbine unit 5a and assists rotation of the compressor unit 5b by obtaining electric power from the marine vessel electric power system 30. Provided between the hybrid electric power generator motor 5c and the marine vessel electric power system 30 are, in order from the hybrid electric power generator motor 5c side, a converter 19 that converts alternating-current power to direct-current power, an inverter 20 that converts direct-current power to alternating-current power, and an on/off switch 21.
Electric power generated by the hybrid electric power generator motor 5c is supplied to an ammonia producing device 2 via the marine vessel electric power system 30 as described below.

As illustrated in FIG. 1, in the marine vessel electric power system 30, a first electric power generating diesel engine 61 including an electric power generator 62, a second electric power generating diesel engine 63 including an electric power generator 64, a storage battery 67, photovoltaic power generator 69 and an external electric power input unit 71 are connected in parallel.
For the storage battery 67, a lithium ion secondary battery may, for example, be preferably used. The storage battery 67 is charged by electric power from the first electric power generating diesel engine 61, the second electric power generating diesel engine 63, the photovoltaic power generator 69 and the hybrid electric power generator motor 5c. The discharging and recharging of the storage battery 67 is controlled by the power management system 72.
The external electric power input unit 71 is supplied with electric power from an electric power source outside the marine vessel (i.e., an on-shore electric power source). The storage battery 67 is charged by the electric power supplied from external electric power input unit 71.
The marine vessel electric power system 30 is connected to the ammonia producing device 2 and a later-described electric heater 73, and electric power is supplied to the ammonia producing device 2 and the electric heater 73.

The exhaust gas economizer 11 is connected to an exhaust gas economizer-use exhaust pipe L5, and exhaust gas discharged from the main engine 3 and water supplied by a water supply pipe (not illustrated in the drawings) are allowed to exchange heat so as to generate steam. On an upstream side of the exhaust gas economizer 11, an exhaust gas economizer on-off valve 22 that controls the flow of the exhaust gas is provided. A switching timing for the exhaust gas economizer on-off valve 22 is determined by an engine main controller 70.

The marine vessel denitration system 1 includes the ammonia producing device 2 and an SCR catalyst unit 4 used for a selective catalytic reduction (SCR). The ammonia producing device 2 and the SCR catalyst unit 4 are connected by a second exhaust pipe L2 on the downstream side of the hybrid turbocharger 5, the ammonia producing device 2 being installed on the upstream side of the exhaust gas flow and the SCR catalyst unit 4 on the downstream side.
As illustrated in FIG. 3, the ammonia producing device 2 includes a hydrogen producing unit 81 that produces hydrogen from water, a nitrogen producing unit 83 that produces nitrogen from air, and an ammonia producing unit 80 that produces ammonia from the hydrogen and the nitrogen.
For the water used in the hydrogen producing unit 81, pure water is used. Fresh water is produced from sea water using a fresh water generator 85 mounted on the marine vessel and the fresh water is purified to pure water using a water purifier 87 mounted on the marine vessel. The hydrogen producing unit 81 uses a solid-state polymer electrolyte film method whereby an ion exchange film is used as an electrolyte to electrolyze pure water. The hydrogen produced by the hydrogen producing unit 81 is treated to remove moisture in a hydrogen drier (not illustrated in the drawings) and then fed to the ammonia producing unit 80.
In the nitrogen producing unit 83, nitrogen is produced from air using a Pressure Swing Adsorption (PSA) method or the like. The nitrogen produced by the nitrogen producing unit 83 is fed to the ammonia producing unit 80.
In the ammonia producing unit 80, the hydrogen and the nitrogen are mixed and heated, and ammonia is produced with a reaction catalyst such as a ruthenium catalyst.

The ammonia producing device 2 consumes electric power for the electrolysis and the like of the hydrogen producing unit 81. To provide such electric power, electric power from the above-described hybrid electric power generator motor 5c is used.
As illustrated in FIG. 1, the ammonia (gas) produced in the ammonia producing device 2 is supplied directly to the second exhaust pipe L2 via an ammonia producing device on-off valve 24. Thus, the produced ammonia is supplied directly into the exhaust gas without being stored on the way. A switching timing for the ammonia producing device on-off valve 24 is determined by the engine main controller 70.
On the downstream side of the ammonia producing device on-off valve 24, a flow rate sensor S1 (not illustrated in the drawings) for measuring an amount of the ammonia is provided.

The exhaust gas is introduced to the SCR catalyst unit 4 from the second exhaust pipe L2 via an SCR on-off valve 26. A switching timing for the SCR on-off valve 26 is determined by the engine main controller 70. In the SCR catalyst unit 4, the NOx in the exhaust gas is selectively reduced by the catalyst and decomposed into non-hazardous nitrogen and steam.
On the upstream side of the SCR catalyst unit 4, the electric heater 73 is provided for heating the exhaust gas that is to be introduced. Electric power is supplied to the electric heater 73 from the marine vessel electric power system 30.

The SCR on-off valve 26 and the exhaust gas economizer on-off valve 22 are opened and closed alternately. Specifically, when it is necessary to perform denitration of the exhaust gas, such as when the marine vessel is operating in areas where exhaust gas NOx regulations are strict (Emission Control Areas; hereinafter referred to as "ECA"), the SCR on-off valve 26 is opened and the exhaust gas economizer on-off valve 22 is closed. On the other hand, when it is not necessary to perform denitration of the exhaust gas, such as when the marine vessel is operating in areas where exhaust gas NOx regulations are relatively light (outside ECA), the SCR on-off valve 26 is closed and the exhaust gas economizer on-off valve 22 is opened.
Note that the SCR on-off valve 26 and the exhaust gas economizer on-off valve 22 may be replaced with a three-way valve.

The engine main controller 70 and an electric power management system (electric power output control unit; referred to hereinafter as "PMS") 72 are provided as control units for controlling the entire marine vessel.

The engine main controller 70 principally controls the main engine 3. The engine main controller 70 receives an engine load signal LI from an engine load detecting means provided in the main engine 3, engine rotation speed N from a rotation speed detecting means that detects a rotation speed of the main engine 3 and a scavenging air pressure P from a scavenging air pressure detecting means that detects scavenging air pressure within the intake manifold of the main engine 3.
The engine main controller 70 performs a predetermined calculation based on the input signals to determine the target ammonia production amount required for denitration of the exhaust gas. The determined target ammonia production amount is transmitted to the ammonia producing device 2.

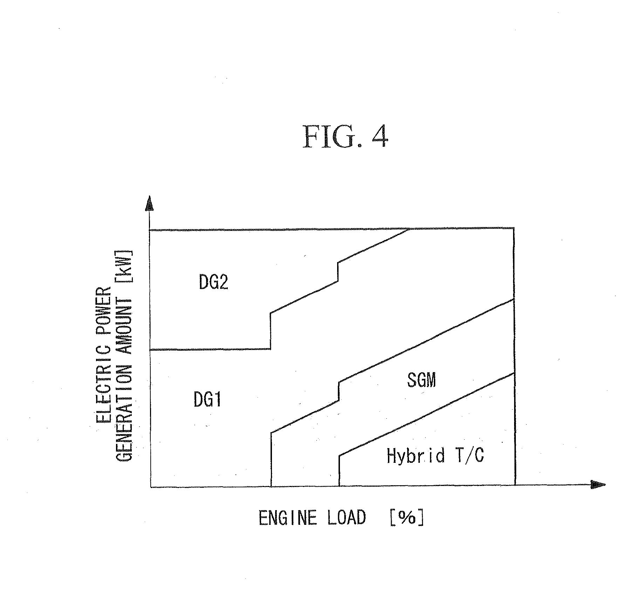

The PMS 72 principally performs control of the marine vessel electric power. The PMS 72 receives the engine load signal LI from the engine main controller 70 and a marine vessel electric power frequency f. The PMS 72 performs a predetermined calculation based on the input signals to determine an electric power generation amount for the hybrid turbocharger 5. To calculate the electric power generation amount for the hybrid turbocharger 5, the mapping shown in FIG. 4 is used. Equations for the mapping or a digitized database of the mapping are stored in advance in a storage unit of the PMS 72.
In FIG. 4, the horizontal axis represents engine load (%) determined from the engine load signal LI and the vertical axis represents a total electric power generation amount (kW). Also, in FIG. 4, "DG1" denotes the electric power generator 62 of the first electric power generating diesel engine 61, "DG2" denotes the electric power generator 64 of the second electric power generating diesel engine 63, "SGM" denotes the shaft generator motor 13, and "Hybrid T/C" denotes the electric power generator 5c of the hybrid turbocharger 5. As shown in FIG. 4, when the engine load is low, electric power is generated by the first and second electric power generating diesel engines 61 and 63 alone. Next, when the engine load exceeds a predetermined value, electric power generation by the shaft generator motor 13 is started. Thereafter, electric power generation by the hybrid turbocharger 5 is started, and the electric power generation amount is gradually increased. The reason that electric power generation by the hybrid turbocharger 5 takes place last is that the exhaust energy of the engine is not large enough to enable the recovery of exhaust energy until the main engine load exceeds the predetermined value. Note that the mapping in FIG. 4 is an example. The actual mapping will be appropriately determined according to an electric power generating system in the marine vessel.
The electric power generation amount is controlled so that the marine vessel electric power frequency f is constant at a predetermined value. Specifically, if the marine vessel electric power frequency f drops below the predetermined value, the electric power demand in the marine vessel is judged to have increased and the electric power generation amount is increased. If the marine vessel electric power frequency f exceeds the predetermined value, the electric power demand in the marine vessel is judged to have dropped and the electric power generation amount is reduced. Thus, when the engine load and the electric power generation amount are determined, the electric power generation amount from the shaft generator motor 13 and the hybrid turbocharger 5 are determined from the mapping in FIG. 4. The electric power generation amount determined in this way is transmitted to the shaft generator motor 13 and the hybrid turbocharger 5 as the target electric power generation amount.

Next, a control method for a marine vessel denitration system 1 with the above-described configuration is described.
The exhaust gas discharged from the main engine 3 is guided from the exhaust manifold 15 to the turbine unit 5a of the hybrid turbocharger 5 via the first exhaust pipe L1. The turbine unit 5a obtains the exhaust gas energy and is caused to rotate. The rotation output is transmitted to the compressor unit 5b and the hybrid electric power generator motor 5c via the rotating shaft 5d. With the compressor unit 5b, air taken in (from the atmosphere) is compressed and fed to the intake manifold via the air cooler 18.
With the hybrid electric power generator motor 5c, electric power is generated from the rotation output obtained from the turbine unit 5a and the electric power output is supplied to the marine vessel electric power system 30 based on commands from the PMS 72. The electric power supplied from the hybrid electric power generator motor 5c is fed to the ammonia producing device 2 and used in the electrolysis in the hydrogen producing unit 81, a transfer pump that transfers the intermediate product gas and produced ammonia, and the like. Further, the electric power generated using the electric power generating diesel engines 61 and 63 is supplied to the marine vessel electric power system 30 in a similar manner.
The shaft generator motor 13 generates electric power by obtaining driving electric power from the main engine 3 and supplies the electric power to the marine vessel electric power system 30, based on commands from the PMS 72.
Also, the electric power generating diesel engines 61 and 63 generate electric power and supply the electric power to the marine vessel electric power system 30, based on commands from the PMS 72.
In the ammonia producing device 2, ammonia is produced from the hydrogen produced in the hydrogen producing unit 81 and the nitrogen produced in the nitrogen producing unit 83 using the electric power from the hybrid electric power generator motor 5c, the shaft generator motor 13, and the electric power generating diesel engines 61 and 63.

Further, the electric power output from the hybrid electric power generator motor 5c, the shaft generator motor 13, and the electric power generating diesel engines 61 and 63 is supplied to the storage battery 67 connected to the marine vessel electric power system 30.
The photovoltaic power generator 69 is connected to the marine vessel electric power system 30, and the electric power generated from sunlight is supplied to the marine vessel electric power system 30, used to meet a load that is connected to the marine vessel electric power system 30 and not illustrated in the drawings, and to charge the storage battery 67.
When the marine vessel is berthed, electric power is supplied from the shore via the external electric power input unit 71 and used to charge the storage battery 67. In this case, the electric power generating diesel engines 61 and 63 are preferably turned off.

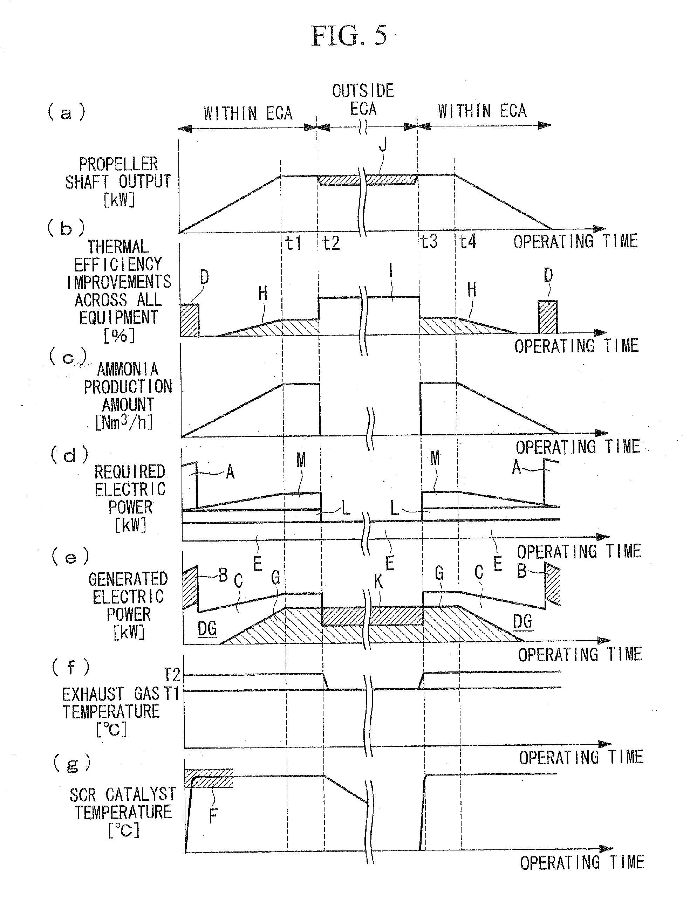

Next, electric power control during operation of the marine vessel is described using FIG. 5(a) to 5(g). The horizontal axes in FIGS. 5(a) to 5(g) represent operating time, which includes the berthed state in a departure port, operation within the port (within ECA), operation in open seas (outside ECA), and entry and berthing in a destination port (within ECA).
The vertical axis in FIG. 5(a) represents the output (kW) of the propeller shaft 10 (see FIG. 1). The vertical axis in FIG. 5(b) represents thermal efficiency improvements (%) across all equipment on the marine vessel. The vertical axis in FIG. 5(c) represents the ammonia production amount (Nm³/h) produced by the ammonia producing device 2. The vertical axis in FIG. 5(d) represents the required electric power (kW) of the marine vessel equipment. The vertical axis in FIG. 5(e) represents the generated electric power (kW) of the marine vessel equipment. The vertical axis in FIG. 5(f) represents the exhaust gas temperature (°C) on the upstream side of the SCR catalyst unit 4. The vertical axis in FIG. 5(f) represents the catalyst temperature (°C) of the SCR catalyst unit 4.

### (In departure port (within ECA))

When the marine vessel is departing from the port within the ECA, the main engine 3 is started and the propeller shaft output is gradually increased, as illustrated in FIG. 5(a). At this time, side thrusters are used to distance the marine vessel from shore. Hence, the required electric power increases illustrated in a region A of FIG. 5(d). As illustrated in FIG. 5(e), the electric power from the electric power generating diesel engines (DG) 61 and 63 in a region C and the electric power stored in the storage battery 67 in a region B are used as the electric power to be supplied to the side thrusters. Thus, since a portion of the electric power supplied to the side thrusters comes from the storage battery 67, the load of the electric power generating diesel engines 61 and 63 can be relatively reduced. Also, electric power recovered from the exhaust energy during previous marine vessel operations and/or electric power supplied in advance from the shore while the marine vessel is berthed has been stored in the storage battery 67. Accordingly, the fuel consumption of the electric power generating diesel engines 61 and 63, which are of lower thermal efficiency than the main engine 3, can be suppressed and, consequently, as illustrated in a region D of FIG. 5(b), the thermal efficiency when berthed can be improved.
Note that, as illustrated in a region E of FIG. 5(d), a certain level of electric power is constantly consumed in the marine vessel, irrespective of the operating time. Also, a region L of FIG. 5(d) represents the electric power used by the electric heater 73, and a region M represents the electric power used by the ammonia producing device 2.

As the propeller shaft output by the main engine 3 is increased, the amount of NOx in the exhaust gases increases. Hence, as illustrated in FIG. 5(c), the ammonia production amount also increases. On the other hand, as illustrated in FIG. 5(f), the exhaust gas temperature is at a predetermined value T1 (°C) but the temperature is not in a range at which the SCR catalyst unit 4 operates appropriately (see a region F in FIG. 5(g)), which is to say, a temperature range at which the catalyst is active and degradation of the catalyst is prevented. The exhaust gas is therefore heated by the electric heater 73 (see FIG. 1) to the desired temperature T2 (°C). At this time, as illustrated in a region G of FIG. 5(e), the electric power generated by the shaft electric power generator motor (SGM) 13 and the electric power recovered from the exhaust energy (hybrid turbocharger 5) are used as the electric power to be supplied to the electric heater 73. As a result, the thermal efficiency is improved, as illustrated in a region H of FIG. 5(b).
When the output of the main engine 3 is increased to increase the propeller shaft output, the electric power generation amount generated by the shaft generator motor (SGM) 13 and the hybrid turbocharger 5 steadily increases and the load of the electric power generating diesel engines 61 and 63 steadily decreases.
Then, after time t1 has elapsed, the speed of the main engine 3 reaches the rated value, and the ammonia production amount becomes constant.

When the marine vessel is operating in port (within ECA), exhaust gas denitration is performed as follows. In this case, the exhaust gas economizer on-off valve 22 is closed, and the ammonia producing device on-off valve 24 and the SCR on-off valve 26 are opened.
The exhaust gas discharged from the turbine unit 5a of the hybrid turbocharger 5 passes through the second exhaust pipe L2, and is mixed with the ammonia (gas) supplied from the ammonia producing device 2. The exhaust gas mixed with the ammonia is introduced to the SCR catalyst unit 4 via the SCR on-off valve 26. If, before being introduced to the SCR catalyst unit 4, the exhaust gas temperature is lower than a predetermined value, the electric heater 73 is turned on by the control unit not illustrated in the drawings and the exhaust gas is heated. On the other hand, if the exhaust gas temperature is equal to or higher than the predetermined value, the electric heater 73 is turned off by the control unit not illustrated in the drawings. The exhaust gas that has passed through the electric heater 73 undergoes denitration in the SCR catalyst unit 4 and is subsequently discharged to the outside from a chimney not illustrated in the drawings.

### (When operating in open seas (outside ECA))

When operating in open seas, the marine vessel is outside ECA, and gas denitration is thus not performed. In this case, as illustrated in FIG. 1, the exhaust gas economizer on-off valve 22 is opened, and the ammonia producing device on-off valve 24 and the SCR on-off valve 26 are closed. Exhaust gas discharged from the turbine unit 5a of the hybrid turbocharger 5 passes through the second exhaust pipe L2 and is introduced to the exhaust gas economizer 11 via the exhaust gas economizer on-off valve 22. In the exhaust gas economizer 11, steam is generated and used in various locations in the marine vessel. The exhaust gas discharged from the exhaust gas economizer 11 is discharged to the outside from a funnel.

Since exhaust gas denitration is not performed, the ammonia production amount is "O", as illustrated in FIG. 5(c). Further, because heating with the electric heater 73 is stopped, the exhaust gas temperature drops to T1 (°C) as illustrated in FIG. 5(f), and the SCR catalyst temperature gradually drops as illustrated in FIG. 5(g).
In open sea operation, the shaft generator motor 13 is driven as a motor to assist the main engine 3. A region J in FIG 5(a) is the propeller shaft output by the shaft generator motor 13. Hence, the output by the main engine 3 can be reduced. The excessive electric power recovered from the exhaust energy and stored in the storage battery 67 is used as the electric power supplied to shaft generator motor 13 (see a region K in FIG. 5(e)). In particular, there is no need to supply electric power to the ammonia producing device 2 and the electric heater 73 (see FIG. 5(d)) and so any excessive electric power obtained by recovering the exhaust energy can be used effectively in the shaft generator motor 13. Hence, the thermal efficiency is improved, as illustrated in a region I of FIG. 5(b).

### (When operating in destination port (within ECA))

In the destination port, the operations are the reverse of those in the departure port.
The ammonia producing device on-off valve 24 and the SCR on-off valve 26 are opened, and the exhaust gas economizer on-off valve 22 is closed.
On entering the destination port at time t3, the marine vessel performs exhaust gas denitration. Hence, as illustrated in FIG. 5(c), ammonia production is started and heating of the exhaust gas with the electric heater 73 begins. Thereafter, when time t4 has elapsed, the load of the main engine 3 is decreased so as to reduce the propeller shaft output. Accordingly, the ammonia production amount is reduced as illustrated in FIG. 5(c), and the amount of recovered exhaust energy is reduced as illustrated in FIG. 5(e). At berthing, the side thrusters are started (see a region B of FIG. 5(e)) and thermal efficiency is improved by using electric power from the storage battery 67 in the same way as at departure (see a region D of FIG. 5(b)).

As described above, the following effects are provided according to this embodiment.
With the ammonia producing device 2, ammonia can be produced on the marine vessel using water and air as raw materials. Hence, there is no need to provide space on the marine vessel to store a reducing agent such as liquid ammonia (such as ammonia aqueous solution) or urea. Hence, the marine vessel denitration system can be installed on the marine vessel without ensuring a large space.

The electric power output of the hybrid electric power generator motor 5c of the hybrid turbocharger 5 that generates electric power using the exhaust gas from the main engine 3 is supplied to the ammonia producing device 2, and so the ammonia producing device 2 can be operated with a low energy consumption. Also, the exhaust energy from the main engine 3 can be used effectively and so it is possible to avoid increasing the capacity or a number of separately provided electric power generating auxiliary engines, such as diesel engine electric power generators.

Due to the provision of the shaft generator motor 13 for assisting the propeller shaft 10, the fuel consumption rate of the main engine 3 can be reduced. Further, the shaft generator motor 13 for assisting the propeller shaft 10 receives an electric power supply from the marine vessel electric power system 30. Hence, the shaft generator motor 13 is driven by electric power recovered from the exhaust energy and, consequently, a system with a high thermal efficiency can be constructed. In particular, when the marine vessel is operating in regions where the exhaust gas denitration is not required (outside ECA), there is no need to supply electric power to the ammonia producing device 2 and the electric heater 73. Hence, excessive electric power obtained by recovering the exhaust energy can be supplied to the shaft generator motor and used effectively.

Due to the inclusion of the storage battery 67 connected to the marine vessel electric power system 30 that supplies electric power to the ammonia producing device 2, electric power from the storage battery 67 can be used when fluctuations in the load of the diesel engine 3 result in fluctuations in the electric power output from the hybrid turbocharger 5. Specifically, this arrangement is effective when the load of the diesel engine 3 is low and sufficient electric power output from the hybrid turbocharger 5 cannot be obtained. Thus, electric power can be supplied in a stable manner to the ammonia producing device 2. Further, since the storage battery 67 is connected to the same marine vessel electric power system 30 as the hybrid turbocharger 5, excessive electric power generated by the electric power generator can be stored.
Further, because the inclusion of the storage battery enables load fluctuations to be suppressed, the capacity and size of the electric power generating diesel engines 61 and 63 can be reduced.

The temperature of the exhaust gas flowing into the SCR catalyst unit 4 can be increased using the electric heater 73. Hence, deterioration of the SCR catalyst can be prevented. Further, the electric heater 73 uses electric power generated through recovery of the heat of the exhaust gas from the main engine 3. Hence, the electric power can be supplied with saving energy.

The photovoltaic power generator 69 is connected to the marine vessel electric power system 30 and the electric power output of the photovoltaic power generator 69 is supplied to the storage battery 67. Hence, electric power can be supplied while saving even more energy.

The external electric power input unit 71 for receiving an electric power supply from the shore is connected to the marine vessel electric power system 30. Hence, the marine vessel can be supplied with electric power from the shore when berthed. Accordingly, when the marine vessel is berthing, a large amount of electric power can be supplied to the side thrusters from the storage battery 67. Hence, the load of the electric power generating diesel engines 61 and 63 can be reduced and overall thermal efficiency is improved.

### (Second Embodiment)

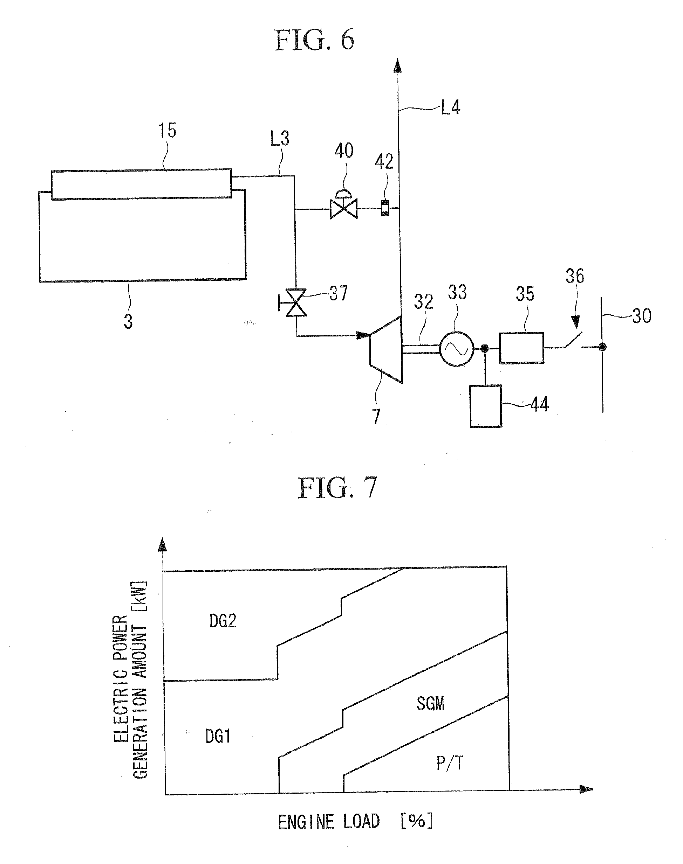

Next, a second embodiment of the present invention will be described using FIGS. 6 and 7. In the above-described first embodiment, the hybrid turbocharger 5 (see FIG. 2) is used as the exhaust energy recovery system 17. This embodiment differs in that an electric power turbine (gas turbine) is used as the exhaust energy recovery system 17. Accordingly, the same reference signs are used for other common constituents and repetitious descriptions are omitted.

A third exhaust pipe L3 is connected to the exhaust manifold 15, and exhaust gas from the main engine 3 is guided to an inlet side of a power turbine 7 via the third exhaust pipe L3. Thus, before the exhaust gas from the main engine 3 is supplied to an exhaust turbocharger, a portion of the exhaust gas from the main engine 3 is bled off and supplied to the power turbine 7. The power turbine 7 is driven to rotate by the bled exhaust gas.
Exhaust gas discharged from the outlet side of the power turbine 7 is guided to the second exhaust pipe L2 via a fourth exhaust pipe L4 (see FIG. 1).

Rotation output from the power turbine 7 is transmitted to the electric power generator connected to the power turbine 33 via a rotational shaft 32. Electric power generated by the electric power generator connected to the power turbine 33 is supplied to the marine vessel electric power system 30 via the frequency converter 35 and the on/off switch 36. Accordingly, the electric power output from the electric power generator connected to the power turbine 33 is supplied to the ammonia producing device 2.
A load bank 44 is provided between the electric power generator connected to the power turbine 33 and the frequency converter 35. For the load bank 44, a load resistance device is used. The load bank 44 is used to consume excessive electric power from the electric power generator connected to the power turbine 33 and thereby reduce fluctuation in the output.

An exhaust gas flow adjusting valve 37 for controlling an amount of gas introduced into the power turbine 7 is provided in the third exhaust pipe L3. A bypass valve 40 and an orifice 42 are provided between the third exhaust pipe L3 and the fourth exhaust pipe L4 to prevent over charging of the turbine unit of the exhaust turbocharger (charging that exceeds the optimal operating pressure of the engine) when the exhaust gas flow adjusting valve 37 is shut off.

In this embodiment, in which exhaust energy is recovered using the power turbine 7 and electric power is generated using the electric power generator connected to the power turbine 33 (P/T) as illustrated in FIG. 7 (corresponding to FIG. 4 of the first embodiment), when the load of the main engine 3 reaches a predetermined value, electric power generation with the shaft generator motor (SGM) 13 and subsequently with the power turbine 7 is started, and the electric power generation amount is steadily increased. This arrangement is used because the exhaust energy from the engine is not large enough to allow recovery of exhaust energy until the load of the main engine exceeds the predetermined value. Note that the mapping in FIG. 7 is an example. The actual mapping will be appropriately determined according to an electric power generating system in the marine vessel.
The target electric power generation amount for the electric power generator connected to the power turbine 33, as obtained based on FIG. 7, is controlled by the opening degree of the exhaust gas flow adjusting valve 37, as illustrated in FIG. 6.

According to this embodiment, the following effects are provided in addition to the effects of the first embodiment.
The electric power output from the electric power generator connected to the power turbine 33 that generates electric power using the power turbine 7 driven by the exhaust gas from the main engine 3 is used in the ammonia producing device 2 via the marine vessel electric power system 30. Hence, the exhaust energy from the main engine 3 can be used effectively.

### (Third Embodiment)

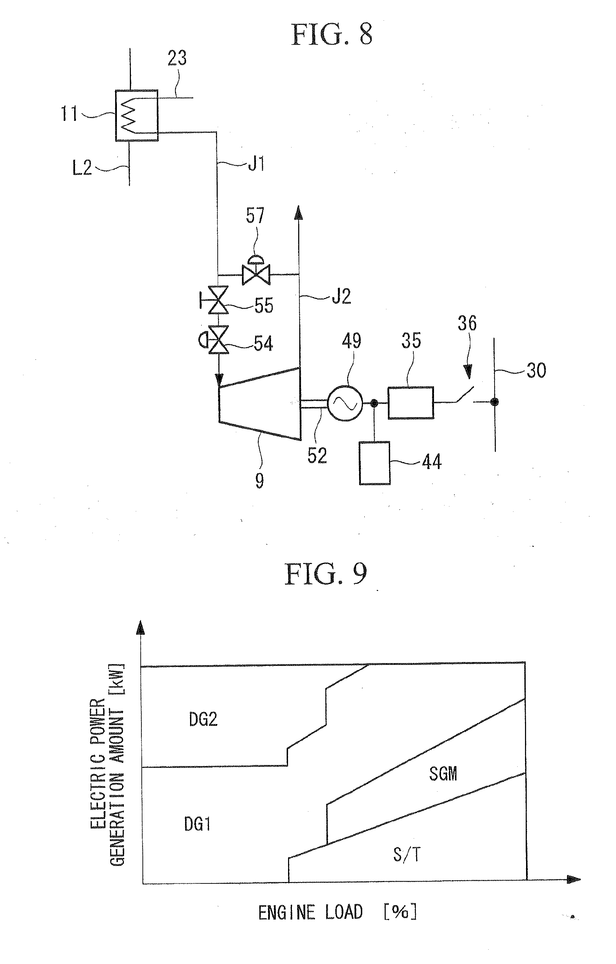

Next, a third embodiment of the present invention will be described using FIGS. 8 and 9. In the above-described first embodiment, the hybrid turbocharger 5 (see FIG. 2) is used as the exhaust energy recovery system 17. This embodiment differs in that a steam turbine is used as the exhaust energy recovery system 17. Accordingly, the same reference signs are used for other common constituents and repetitious descriptions are omitted.

As illustrated in FIG. 8, a steam turbine 9 is driven to rotate by steam generated by the exhaust gas economizer 11 and supplied via a first steam pipe J1.
The exhaust gas economizer 11 receives exhaust gas discharged from the main engine 3 via the second exhaust pipe L2. Steam generated by the exhaust gas economizer 11 is introduced to the steam turbine 9 via the first steam pipe J1. After being used in the steam turbine 9, the steam is discharged using the second steam pipe J2 and guided to a condenser not illustrated in the drawings.

Rotation output from the steam turbine 9 is transmitted to the electric power generator connected to the steam turbine 49 (S/T) via a rotational shaft 52. Electric power generated by the electric power generator connected to the steam turbine 49 is supplied to the marine vessel electric power system 30 via the frequency converter 35 and the on/off switch 36. Accordingly, the electric power output from the electric power generator connected to the steam turbine 49 is supplied to the ammonia producing device 2.

The first steam pipe J1 is provided with a steam flow adjusting valve 54 for controlling an amount of steam introduced to the steam turbine 9 and an emergency shut-off valve 55 to shut off the supply of steam to the steam turbine 9 in an emergency. A steam bypass valve 57 is provided between the first steam pipe J1 and the second steam pipe J2 to adjust the flow rate of steam bypassing the steam turbine 9.

In this embodiment, in which exhaust energy is recovered using the steam turbine 9 and electric power is generated using the electric power generator connected to the steam turbine 49 as illustrated in FIG. 9 (corresponding to FIG. 4 of the first embodiment), when the load of the main engine 3 reaches a predetermined value, electric power generation with the steam turbine 9 is started. Subsequently, electric power generation with the shaft electric power generator motor (SGM) 13 is started, with the electric power generation amount being steadily increased as the load increases. Note that the mapping in FIG. 9 is an example. The actual mapping will be appropriately determined according to an electric power generating system in the marine vessel.
The target electric power generation amount for the electric power generator connected to the steam turbine 49, as obtained based on FIG. 9, is controlled by the opening degree of the steam flow adjusting valve 54, as illustrated in FIG. 8.

According to this embodiment, the following effects are provided in addition to the effects of the first embodiment.
Electric power is generated by the steam turbine 9 driven by steam generated by the exhaust gas economizer 11 using the exhaust gas from the main engine 3. Hence, the exhaust energy from the main engine 3 can be used more effectively.

### (Fourth Embodiment)

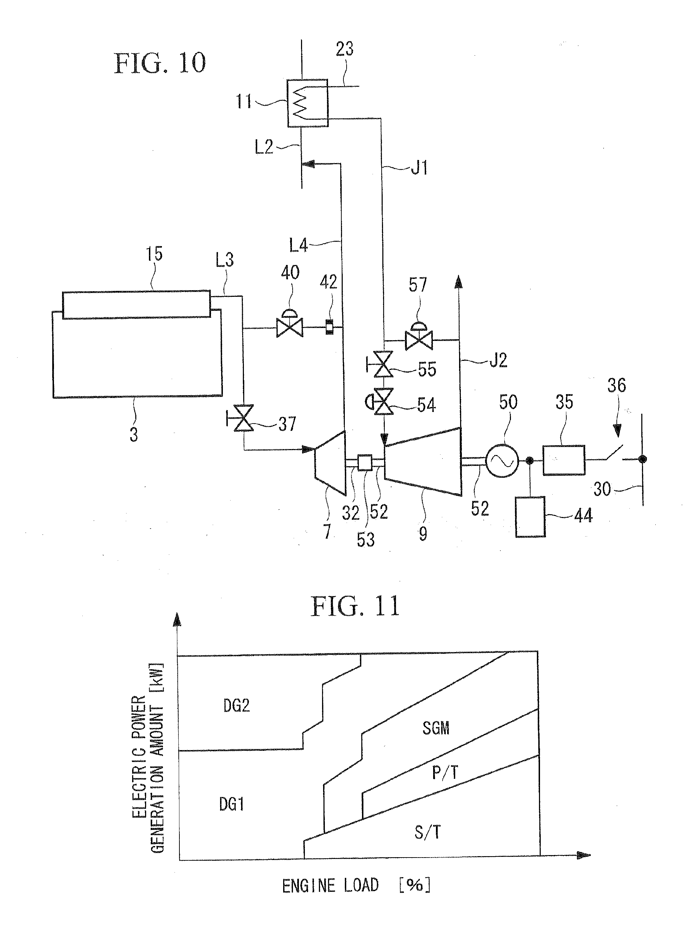

Next, a fourth embodiment of the present invention will be described using FIGS. 10 and 11. In the above-described second embodiment, the power turbine 7 is used as the exhaust energy recovery system 17. This embodiment differs in that a power turbine and a steam turbine are used as the exhaust energy recovery system 17. Accordingly, the same reference signs are used for other common constituents and repetitious descriptions are omitted.

As illustrated in FIG. 10, the steam turbine 9 is driven to rotate by steam generated by the exhaust gas economizer 11 and supplied via the first steam pipe J1.
The exhaust gas economizer 11 receives exhaust gas discharged from the main engine 3 via the second exhaust pipe L2, and exhaust gas discharged from the outlet side of the power turbine 7 via the fourth exhaust pipe L4. Steam generated by the exhaust gas economizer 11 is introduced to the steam turbine 9 via the first steam pipe J1. After being used in the steam turbine 9, the steam is discharged using the second steam pipe J2 and guided to a condenser not illustrated in the drawings.

The power turbine 7 and the steam turbine 9 are coupled in series to drive an electric power generator connected to the combined turbine 50. In other words, the electric power generator 50 has different types (heterogeneous) of turbines, such as the power turbine 7 and the steam turbine 9, connected on the same shaft. Electric power generated by the electric power generator connected to the combined turbine 50 is supplied to the marine vessel electric power system 30 via the frequency converter 35 and the on/off switch 36. Accordingly, the electric power output from the electric power generator connected to the combined turbine 50 is supplied to the ammonia producing device 2.

A rotational shaft 52 of the steam turbine 9 is connected to the electric power generator connected to the combined turbine 50 via a reduction gear and a coupling not illustrated in the drawings. The rotational shaft 32 of the power turbine 7 is coupled to the rotational shaft 52 of the steam turbine 9 via a reduction gear not illustrated in the drawings and a clutch 53. For the clutch 53, a clutch that engages and disengages at predetermined speeds, such as a Synchro-Self-Shifting (SSS) clutch is favorably used.

The first steam pipe J1 is provided with a steam flow adjusting valve 54 for controlling an amount of steam introduced to the steam turbine 9 and an emergency shut-off valve 55 to shut off the supply of steam to the steam turbine 9 in an emergency. A steam bypass valve 57 is provided between the first steam pipe J1 and the second steam pipe J2 to adjust the flow rate of steam bypassing the steam turbine 9.

In this embodiment, in which electric power is generated in the electric power generator connected to the combined turbine 50 with the exhaust energy being recovered using the power turbine 7 and the steam turbine 9 as illustrated in FIG. 11 (corresponding to FIG. 4 of the first embodiment), electric power generation with the steam turbine 9 is started when the load of the main engine 3 is equal to or higher than a predetermined value, and when the load of the main engine 3 has further increased, electric power generation with the shaft generator motor (SGM) 13 is started, and subsequently, electric power generation with the power turbine 7 is started. The electric power generation amount is then steadily increased as the load increases. Note that the mapping in FIG. 11 is an example. The actual mapping will be appropriately determined according to an electric power generating system in the marine vessel.
The target electric power generation amount for the electric power generator connected to the combined turbine 50, as obtained based on FIG. 11, is controlled by the opening degree of the exhaust gas flow adjusting valve 37 and the steam flow adjusting valve 54, as illustrated in FIG. 10.

According to this embodiment, the following effects are provided in addition to the effects of the first embodiment and the second embodiment.
Electric power is generated by the power turbine 7 driven by the exhaust gas from the main engine 3 and by the steam turbine 9 driven by steam generated by the exhaust gas economizer 11 using the exhaust gas from the main engine 3. Hence, the exhaust energy from the main engine 3 can be used more effectively.

### (Fifth Embodiment)

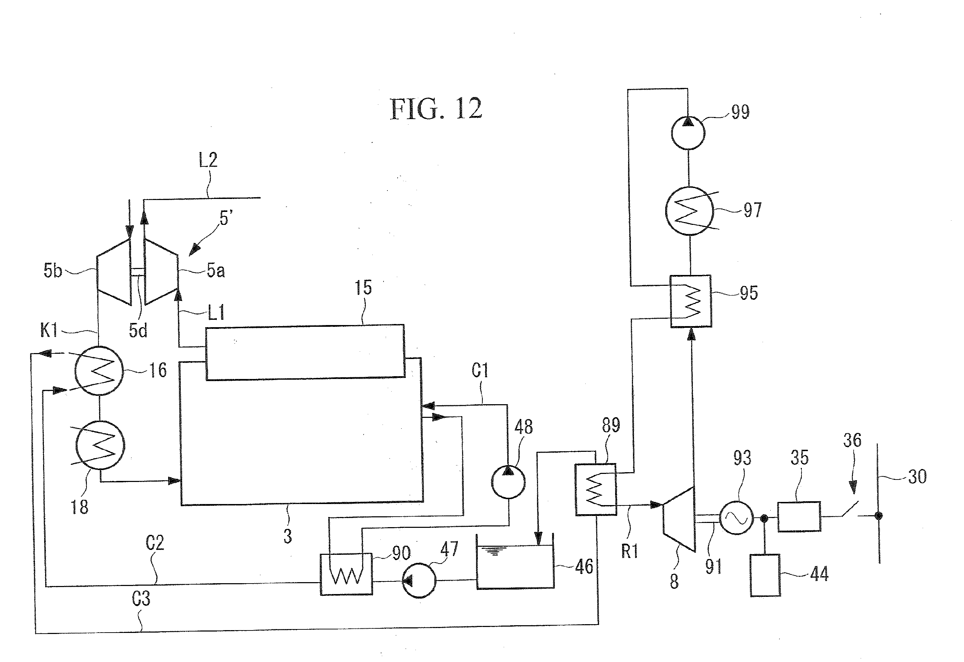

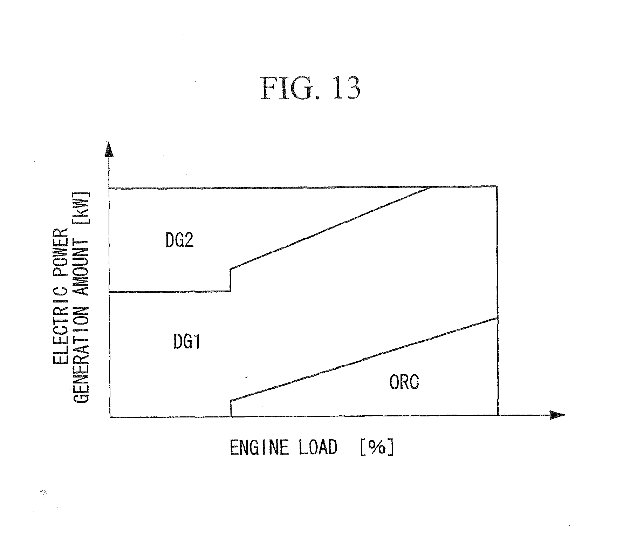

Next, a fifth embodiment of the present invention will be described using FIGS. 12 and 13. In the above-described second embodiment, the power turbine 7 is used as the exhaust energy recovery system 17. This embodiment differs in that a heating medium turbine is used as the exhaust energy recovery system 17. Accordingly, the same reference signs are used for other common constituents and repetitious descriptions are omitted.

As illustrated in FIG. 12, a jacket water heat exchanger 90 is provided in a second cooling water pipe C2. Jacket water circulated through a first cooling water pipe C1 and a cylinder unit 13 by a circulation pump 48 is introduced to the jacket water heat exchanger 90, thereby heating cooling water introduced from a cooling water tank 46.
Cooling water pumped from the cooling water tank 46 by a circulation pump 47 and heated in stages by being passed through a second air cooler 16 via the heat exchanger 90 and the second cooling water pipe C2 is introduced to a heat exchanger 89 by a third cooling water pipe C3.
A heating medium turbine 8 is driven to rotate by supplying the heating medium vaporized by the heat exchanger 89 via a first heating medium pipe R1. After being used in the heating medium turbine 8, the vaporized heating medium undergoes heat exchange with low-temperature heating medium in an economizer 95, and is then condensed in a condenser 97 and recirculated into the system by a circulation pump 99.
In the configuration of FIG. 12, the heating medium undergoes heat exchange with cooling water that has passed through the jacket water heat exchanger 90 and the second air cooler 16. Note, however, that a configuration in which the heating medium undergoes heat exchange with water heated by heat exchange with the exhaust gas from the engine is also possible.

Rotation output from the heating medium turbine 8 is transmitted to an electric power generator connected to the heat transmitting medium turbine 93 via a rotational shaft 91. Electric power generated by the electric power generator connected to the heat transmitting medium turbine 93 is supplied to the marine vessel electric power system 30 via the frequency converter 35 and the on/off switch 36. Accordingly, the electric power output from the electric power generator connected to the heat transmitting medium turbine 93 is supplied to the ammonia producing device 2.

In the above-described configuration, an electric power generation amount generated by the electric power generator connected to the heat transmitting medium turbine 93 is always set at the maximum possible level. When the electric power supply amount is insufficient to satisfy the demand on the marine vessel electric power system 30, load control is performed on the first and/or second electric power generating diesel engines 61 and 63.

In this embodiment, in which exhaust energy is recovered using the heating medium turbine 8 and electric power is generated using the electric power generator connected to the heat transmitting medium turbine 93 as illustrated in FIG. 13, electric power generation using the heating medium turbine 8 is started when the load of the main engine 3 is equal to or higher than a predetermined value, with the electric power generation amount being steadily increased as the load increases. This arrangement is used because the exhaust energy from the engine cooling water and/or the exhaust energy are not large enough to allow recovery of exhaust energy until the main engine load exceeds the predetermined value. Note that the mapping in FIG. 13 is an example. The actual mapping will be appropriately determined according to the electric power generating system in the marine vessel.

According to this embodiment, the following effects are provided in addition to the effects of each of the above-described embodiments.
The electric power output from the electric power generator connected to the heat transmitting medium turbine 93 that generates electric power using the heating medium turbine 8 driven by the heating medium vaporized through heat exchange with cooling water of the diesel engine 3 is used in the ammonia producing device 2 via the marine vessel electric power system 30. Hence, the low-temperature exhaust energy from the diesel engine 3 can be used effectively.

**{Reference Signs List}**

| | |
|---|---|
| 1 | Marine vessel denitration system |
| 2 | Ammonia producing device |
| 3 | Main engine |
| 4 | SCR catalyst unit |
| 5 | Hybrid turbocharger |
| 5c | Hybrid electric power generator motor (electric power generator connected to the turbocharger) |
| 7 | Power turbine |
| 8 | Heat transmitting medium turbine |
| 9 | Steam turbine |
| 11 | Exhaust gas economizer (exhaust gas boiler) |
| 30 | Marine vessel electric power system |
| 33 | Electric power generator connected to power turbine |
| 49 | Steam turbine side electric power generator |
| 50 | Electric power generator connected to the combined turbine |
| 70 | Engine main controller |
| 72 | Power management system (PMS; electric power output control unit) |
| 73 | Electric heater |
| 81 | Hydrogen producing unit |
| 83 | Nitrogen producing unit |
| 93 | Electric power generator connected to the heat transmitting medium turbine |

## Claims

1. A marine vessel denitration system comprising:
an ammonia producing device that includes a hydrogen producing unit for producing hydrogen from water and a nitrogen producing unit for producing nitrogen from air, that produces ammonia from the hydrogen produced by the hydrogen producing unit and the nitrogen produced by the nitrogen producing unit, and that is supplied with electric power from a marine vessel electric power system;
a denitration catalyst unit that is provided in an exhaust gas passage of a main engine for marine vessel propulsion and performs denitration of the exhaust gas with the ammonia produced by the ammonia producing device;
an electric power generator that generates electric power using exhaust gas energy from the main engine and supplies the electric power to the marine vessel electric power system;
a shaft generator motor that generates electric power by being driven by the main engine to enable electric power generating operations for supplying electric power to the marine vessel electric power system and assists a propeller shaft when driven by electric power supplied from the marine vessel electric power system; and
an electric power output control unit that controls an electric power supply to the ammonia producing device, an electric power output from the electric power generator, and an electric power supply to and an electric power output from the shaft generator motor.

2. The marine vessel denitration system according to claim 1, further comprising a storage battery connected to the marine vessel electric power system.

3. The marine vessel denitration system according to claim 1 or 2, further comprising photovoltaic power generator connected to the marine vessel electric power system.

4. The marine vessel denitration system of any one of claims 1 to 3, wherein an external electric power input unit that receives an electric power supply from an electric power source outside a marine vessel is connected to the marine vessel electric power system.

5. The marine vessel denitration system according to any one of claims 1 to 4, further comprising an electric heater that heats the exhaust gas to be introduced to the denitration catalyst unit,
wherein electric power is supplied to the electric heater from the marine vessel electric power system.

6. The marine vessel denitration system according to any one of claims 1 to 5, wherein a turbocharger side electric power generator that generates electric power by obtaining rotation energy of an exhaust turbocharger of the main engine is used as the electric power generator.

7. The marine vessel denitration system according to any one of claims 1 to 5, wherein an electric power generator connected to a power turbine that generates electric power using a power turbine driven by the exhaust gas from the main engine is used as the electric power generator.

8. The marine vessel denitration system according to any one of claims 1 to 5, wherein an electric power generator connected to a steam turbine that generates electric power using a steam turbine driven by steam generated by an exhaust gas boiler utilizing the exhaust gas from the main engine is used as the electric power generator.

9. The marine vessel denitration system according to any one of claims 1 to 5, wherein an electric power generator connected to a combined turbine that generates electric power using the electric power turbine driven by exhaust gas from the main engine and the steam turbine driven by steam generated by the exhaust gas boiler utilizing the exhaust gas from the main engine is used as the electric power generator.

10. The marine vessel denitration system according to any one of claims 1 to 5, wherein an electric power generator connected to a heat transmitting medium turbine that generates electric power using a turbine driven by a vaporized heating medium is used as the electric power generator, the heating medium being vaporized through heat exchange with heated water, and the heated water being heated by heat exchange with exhaust gas and/or cooling water from a jacket or an air cooler of the main engine.

11. A marine vessel, comprising:
a main engine for marine vessel propulsion; and
the marine vessel denitration system according to any one of claims 1 to 10.

12. A control method for a marine vessel denitration system for controlling a marine vessel denitration system including an ammonia producing device that has a hydrogen producing unit for producing hydrogen from water and a nitrogen producing unit for producing nitrogen from air, that produces ammonia from the hydrogen produced by the hydrogen producing unit and the nitrogen produced by the nitrogen producing unit, and that is supplied with electric power from a marine vessel electric power system,
a denitration catalyst unit that is provided in an exhaust gas passage of a main engine for marine vessel propulsion and performs denitration of the exhaust gas with the ammonia produced by the ammonia producing device,
an electric power generator that generates electric power using exhaust gas energy from the main engine and supplies the electric power to the marine vessel electric power system, and
a shaft generator motor that generates electric power by being driven by the main engine to enable electric power generating operations for supplying electric power to the marine vessel electric power system and assists a propeller shaft when driven by electric power supplied from the marine vessel electric power system,
wherein the control method for a marine vessel denitration system comprising
controlling an electric power supply to the ammonia producing device, an electric power output from the electric power generator, and an electric power supply to and an electric power output from the shaft generator motor by an electric power output control unit.
